Europäisches Patentamt

(19) European Patent Office

Office européen des brevets

(11) Publication number: **0 052 743**
A1

(12) **EUROPEAN PATENT APPLICATION**

(21) Application number: **81108231.2**

(22) Date of filing: **12.10.81**

(51) Int. Cl.³: **F 16 K 11/06**

(30) Priority: **24.11.80 IT 2618680**

(43) Date of publication of application:
**02.06.82 Bulletin 82/22**

(84) Designated Contracting States:
**BE CH DE FR GB LI**

(71) Applicant: **RUBINETTERIE STELLA S.p.A.**
**Via Panzeri, 10**
**I-20100 Milano(IT)**

(72) Inventor: **Stella, Pietro**
**Via Cerruti, 8**
**I-28100 Novara(IT)**

(74) Representative: **Modiano, Guido et al,**
**MODIANO & ASSOCIATI S.A.S. Via Meravigli, 16**
**I-20123 Milan(IT)**

(54) **Seal for fluid intake ports in single lever mixer faucets.**

(57) The technical problem with which the Applicant was confronted concerned the reduction of the frictional resistance and drag between moving parts on the interior of the mixer faucet in order to improve the smooth and precise operation of the control lever thereof.

The solution to the technical problem is provided by a seal, characterized by the provision of substantially rigid guide and housing means (21) for annular sealing elements (19), which are adapted for transmitting the forces involved between a spring (20) and a tubular element (5), and not acting directly on the annular sealing element (19).

Fig.1

EP 0 052 743 A1

COMPLETE DOCUMENT

Croydon Printing Company Ltd.

This invention relates to a seal, particularly for fluid intake ports in single lever mixer faucets.

Currently available are several types of mixer faucets, the term encompassing, for example, faucets utilized in sanitary systems, bathrooms, sinks, shower baths, and other appliances which require controlled hot and cold water flows. Also well known are mixer faucets, wherein the opening and closing operations and the control of both the liquid flow rate and temperature -- the latter being a function of the hot to cold water ratio of admixture -- are accomplished through suitable movements of a single control lever.

Among single control lever mixer faucets, more closely related to this invention are the ones incorporating a valve disk which is retained in a substantially horizontal position, or parallel to itself, such that its bottom side contacts at all times the top edges of tubular elements accommodated in the fluid intake ports. Said tubular elements are known to be movable in an axial direction relatively to the intake ports, and are held in intimate contact relationship with the valve disk under the bias force of elastic elements, in particular coil springs, thus providing a sealing action against leakage through the valve disk-tubular elements coupling.

A displacement movement of the valve disk, as brought about by moving the control lever, results, depending on the mode of operation, in the partial or full opening or closing of one or both the fluid intake ports, to thus provide the desired conditions of temperature and flow rate for the liquid issued from the faucet.

Such conventional design single lever mixer faucets frequently exhibit drawbacks, a most serious one relating to the faucet closing, opening and adjusting operations, which are often inconvenient to carry out owing to the control lever movement being a jerky one instead of a smooth continuous movement.

This is substantially due to internal frictional resistance and drag between the parts of the faucet adjusting mechanism which are set in relative motion. In particular, it has been found that the cited drawback is also attributable to sealing rings being interposed, in said mixer faucet of conventional design, between said tubular elements and said springs, for the purpose of avoiding leakage paths between the tubular elements and their seats in the intake ports.

That positioning of the sealing rings results in the same undergoing, additionally to partial deformation under the water pressure for ensuring the desired sealing action, further stresses and deformation. In fact, a depression of the tubular elements, resulting from a displacement of the valve disk following the actuation of the control lever, is opposed by the spring which also transmits the force to the sealing ring interposed between the spring and tubular element. The additional stresses thus generated on the sealing ring cause the latter to be squeezed in the interspace between the tubular element and its seat, thereby frictional effects and resistance are induced which reflect in a rough and inaccurate movement of the lever.

It should be further noted that the above operational conditions lead to premature deterioration of the sealing ring itself, with consequent loss of its sealing power and dripping through the faucet.

Thus the task of this invention is to eliminate the foregoing drawbacks by providing a seal which can afford an attenuation of the causes for friction and drag between moving parts, in particular parts located at the faucet intake ports, so that the faucet can be controlled in a smoother, and more accurate, manner.

Within this task it is an object of the invention to improve the sealing action between the intake ports and inner chamber of the faucet body, to thus establish optimum working conditions for the sealing rings provided to this end.

A further object of this invention is to provide a seal which can be readily manufactured and is simple to assemble.

The aforesaid task and objects are achieved by a seal for fluid intake ports in single lever mixer faucets, comprising a tubular element slidably accommodated in a fluid intake port against the bias of a spring acting on one side of a valve disk, an annular sealing element between said tubular element and said intake port associated with said tubular element, characterized in that it comprises substantially rigid guide and housing means for said annular sealing element effective to transmit the forces between said spring and said tubular element.

Further features and advantages of the invention will be more clearly apparent from a description of a preferred but not limitative embodiment of this seal, with reference to the accompanying exemplary drawings, where:

Figure 1 is an axial sectional view through a mixer faucet;

Figure 2 is a partly sectional perspective view of the faucet body;

Figure 3 is a broken away axial section view of a particular embodiment of the seal;

Figure 4 is a broken away axial section view of another particular embodiment of the seal;

Figure 5 is a broken away axial section view of a further particular embodiment of this seal; and

Figure 6 is a broken away axial section view of yet another particular embodiment of this seal.

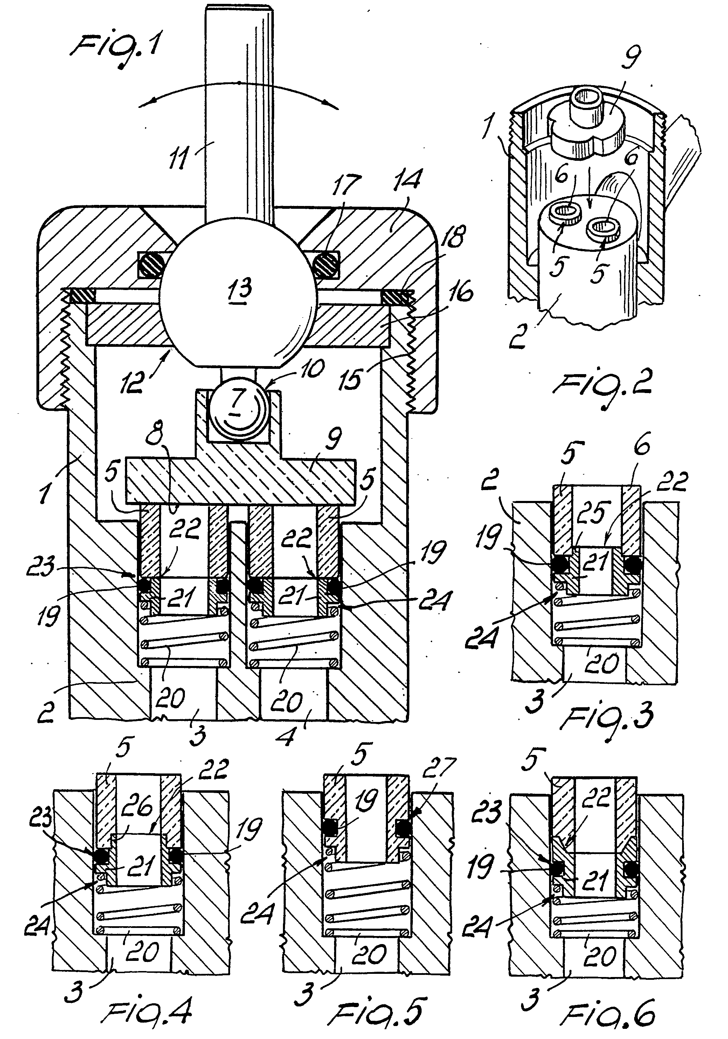

With reference to the drawing figures, and specifically to Figures 1 and 2, a mixer faucet comprises a body 1, to the lower portion 2 whereof liquid intake ports 3 and 4 are arranged to open, said ports receiving tubular elements 5. The tubular elements 5 are arranged to abut, with their top edges 6, against the bottom side 8 of a valve disk 9.

As may be seen in Figure 1, said valve disk 9 is in turn connected, by means of a first ball swivel connection 10, to a control lever 11, having a first ball element 7.

Said control lever 11 is movable relatively to the body 1 by means of a second swivel connection 12, wherein a second ball element 13 is arranged free to rotate about its center, it being retained by a cover 14 which engages, through threads 15, with the body 1 of the faucet and by an element 16 rigid with said body 1, there being also provided a sealing ring 17 and a gasket 18.

The arrows shown in Figure 1 indicate two possible directions of rotation of the control lever in the section plane of the figure, it being to be noted that the rotational movements, thanks to the ball swivel connection 12, may also occur in different planes from the one considered. Also to be noted is that not all of the elements which characterize the faucet operation are shown in Figure 2, and that for convenience of illustration only the valve disk 9 is shown which, with the faucet in operation, bears onto the tubular elements 5 in the direction of the arrow.

Advantageously, in accordance with this invention, the intake ports 3 and 4 which, in the preferred embodiment being described, are identical in shape and dimensions, also accommodate sealing rings 19 which constitute the annular sealing elements of the springs 20 and axially bored cylindrical elements 21, constituting said substantially rigid guide and housing means.

Suitably, in accordance with the invention, the axially bored cylindrical elements 21, shown in Figure 4, are further characterized in that they have a substantially flat surface 22 mating the tubular elements 5, and in that they are formed with a reduced outside diameter portion 23 intended to accommodate the sealing ring 19 therein and with a lead-in portion 24 for coupling said axially bored cylindrical element 21 to the spring 20.

Figures 3 to 6 illustrate other particular embodiments of the guide and housing means for the sealing ring 19.

In particular, in FIGURES 3,4,6, said guide and housing means are defined by the axially bored cylindrical element, also generally indicated at 21, which has, however, mating surfaces 22 of a different shape from the similar element shown in Figure 1.

With reference to Figure 3, said axially bored cylindrical elements has a stepped edge 25 engaging with the bore in the tubular element 5. Figure 4 shows instead the coupling as implemented by a wider portion in the inside diameter of the tubular element 5, wherein there engages a corresponding step 26 of the axially bored cylindrical element 21.

Figure 6 illustrates a further embodiment, wherein the mating surface 22 has a substantially frusto-conical shape.

According to yet another embodiment of the guide and housing means, shown in Figure 5, the same is defined by a groove 27 formed directly on the outer surface of the generic tubular element 5, which is suitable to accommodate said sealing ring 19.

The invention operates as follows.

Operation of the control lever 11 brings about, in a known manner, a displacement movement of the valve disk 9 which, by virtue of the interconnections provided, moves to partially or completely shut off the intake ports. This displacement movement has both horizontal and vertical components. The vertical components, in particular, are of limited magnitude and produce corresponding axial movements of the tubular elements 5, which are held in contact with said valve disk 9 by the springs 20.

The thrust force from the springs 20 to the tubular elements 5 is suitably transmitted without directly affecting the seal ring 19, thanks to the interposition of the cylindrical elements 21 or, according to the embodiment illustrated in Figure 5, to the seal ring 19 being positioned directly in the groove 27 formed on the tubular element 5.

It has been found in actual practice that the seal just described enables the seal ring to perform its function under the sole urge of the water pressure and without undergoing the squeezing action between the spring and tubular element as it

0052743

occurred in the conventional prior approaches.

Accordingly, it could be ascertained that the operation of the control lever is appreciably smoother and more continuous, with attendant undoubtful advantages as regards accuracy of operation and proper closing of the faucet in general.

The invention as described is susceptible to many modifications and variations without departing from the scope of the instant inventive concept.

Thus, for example, the mating surfaces between the tubular element and axially bored cylindrical element may be given different shapes, compatibly with construction and functional requirements. In practicing the invention, the materials used and the dimensions may be any selected ones to suit individual applicational requirements.

## CLAIMS

1. A seal for fluid intake ports in single lever mixer faucets, comprising a tubular element (5) slidably accommodated in a fluid intake port (3) against the bias of a spring (20) acting on one side (8) of a valve disk (9), an annular sealing element (19) between said tubular element (5) and said intake port (3) associated with said tubular element (5), characterized in that it comprises substantially rigid guide and housing means (21) for said annular sealing element (19) effective to transmit the forces between said spring (20) and said tubular element (5).

2. A seal according to Claim 1, characterized in that said guide and housing means (21) is defined by an axially bored cylindrical element (21) interposed between said tubular element (5) and said spring (20) and formed with an external groove (23) adapted for accommodating said annular sealing element therein.

3. A seal according to Claim 2, characterized in that the diameters of the bores in said tubular element (5) and said axially bored cylindrical element (21) are substantially equal.

4. A seal according to Claim 2, characterized in that the mating surface (22) between said axially bored cylindrical element (21) and said tubular element (5) is substantially flat.

5. A seal according to Claim 2, characterized in that the mating surface (22) between said axially bored cylindrical element (21) and said tubular element (5) is of stepped (26) configuration.

6. A seal according to Claim 2, characterized in that the mating surface (22) between said axially bored cylindrical element (21) and said tubular element (5) are in the shape of a truncated cone.

7. A seal according to Claim 2, characterized in that said axially bored cylindrical element (21) has a smaller diameter bore than said tubular element (5) and is formed with a stepped edge (25) engaging in the bore of said tubular element (5).

8. A seal according to Claim 2, characterized in that said axially bored cylindrical element (21) has an annular lead-in recess (24) formed at the lower end thereof for association with said spring (20).

9. A seal according to Claim 1, characterized in that said guide and housing means (21) are defined by a circular groove (27) adapted for accommodating said annular sealing element (19) and formed directly on the exterior of said tubular element (5), and by a lead-in (24) in the lower portion of said tubular element adapted for association with said spring (20).

Fig.1

Fig.2

Fig.3

Fig.4

Fig.5

Fig.6

0052743

**European Patent Office**

**EUROPEAN SEARCH REPORT**

Application number

EP 81 10 8231

## DOCUMENTS CONSIDERED TO BE RELEVANT

| Category | Citation of document with indication, where appropriate, of relevant passages | Relevant to claim |
|---|---|---|
| A | DE - A - 2 359 312 (MORISSEAU) | |
| A | US - A - 3 023 784 (MONSON) | |
| A | FR - A - 2 350 529 (SOCIETE GENERALE DE FONDERIE) | |
| A | US - A - 4 022 242 (TURECEK) | |
| A | US - A - 2 653 003 (OVERBEKE) | |
| A | US - A - 3 561 479 (ARCHER) | |

---

**CLASSIFICATION OF THE APPLICATION (Int. Cl. 3)**

F 16 K 11/06

**TECHNICAL FIELDS SEARCHED (Int.Cl. 3)**

F 16 K

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-02-1982 | VAN REETH |

EPO Form 1503.1 06.78